(19) Europäisches Patentamt
European Patent Office
Office européen des brevets

(11) Veröffentlichungsnummer: **0 006 574**
**B1**

# (12) EUROPÄISCHE PATENTSCHRIFT

(45) Veröffentlichungstag der Patentschrift: **24.03.82**

(51) Int. Cl.³: **C 08 K 5/20**, C 08 L 67/00, C 09 B 1/42, C 08 J 3/20

(21) Anmeldenummer: **79102039.9**

(22) Anmeldetag: **20.06.79**

(54) **Verfahren zum Färben linearer Polyester in der Masse mit Anthrachinonfarbstoffen.**

(30) Priorität: **29.06.78 CH 7100/78**

(43) Veröffentlichungstag der Anmeldung: **09.01.80 Patentblatt 80/1**

(45) Bekanntmachung des Hinweises auf die Patenterteilung: **24.03.82 Patentblatt 82/12**

(84) Benannte Vertragsstaaten: **CH DE FR GB IT**

(56) Entgegenhaltungen:
**DE-B-1 212 936**
**FR-A-2 329 701**
**FR-A-2 369 314**

(73) Patentinhaber: **CIBA-GEIGY AG, Patentabteilung Postfach, CH-4002 Basel (CH)**

(72) Erfinder: **Jost, Max, Rebgartenweg 20, CH-4104 Oberwil (CH)**

**EP 0 006 574 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

Verfahren zum Färben linearer Polyester in der Masse mit Anthrachinonfarbstoffen

Es ist aus der CH-PS 533 660 bekannt, dass man 1-Amino-2-halogen-4-p-toluolsulfonylamino-anthrachinone zum Färben linearer Polyester in der Masse verwenden kann. Die erhaltenen rot-violetten Färbungen sind jedoch farbschwach und zeigen nur mässige Lichtechtheit.

Es wurde nun gefunden, dass man in der Masse rot-violett gefärbte Polyester von ausgezeichneter Reinheit und Lichtechtheit erhält, wenn man als Farbstoffe Anthrachinonverbindungen der Formel

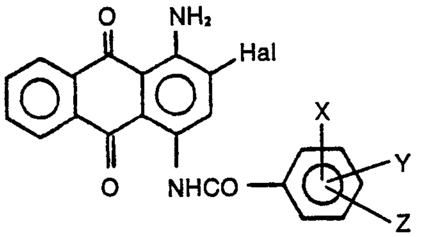

(I)

verwendet, worin Hal ein Chlor- oder Bromatom, X ein H- oder Halogenatom, eine Alkyl- oder Alkoxygruppe mit 1 - 6 C-Atomen, eine Alkoxycarbonylgruppe mit 2 - 7 C-Atomen, eine Phenylgruppe oder eine gegebenenfalls durch Chloratome oder Methylgruppen substituierte Phenoxygruppe, Y und Z H- oder Halogenatome oder Methylgruppen bedeuten.

Von besonderem Interesse sind Farbstoffe der Formel

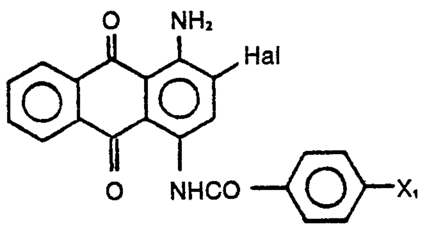

worin Hal ein Chlor- oder Bromatom und $X_1$ ein H- oder Chloratom, und insbesondere solche, worin Hal ein Bromatom bedeutet.

Die erfindungsgemäss zu verwendenden Farbstoffe können nach bekannten Verfahren erhalten werden. Die Herstellung von 1-Amino-2--chlor- bzw. 1-Amino-2-brom-4-benzoylamino-anthrachinon ist in der US-PS 3 715 373, Beispiel 1, beschrieben. 1-Amino-2-brom-4-benzoyl-aminoanthrachinon kann zudem in sehr guter Qualität durch Umsetzung von 1,4-Diamino-2-bromanthrachinon mit Benzoylchlorid in Gegenwart von Stickstoffbasen und Lösungsmittel unter milden Bedingungen, erhalten werden.

1-Amino-2-brom-4-benzoylaminoanthrachinon kann auch nach dem in der CH-PS 505 784 beschriebenen Verfahren durch Bromierung von 1-Amino-4-benzoylaminoanthrachinon in einem Nitrobenzol-Wasser-Gemisch erhalten werden.

Als Beispiele für der Formel (I) entsprechende Farbstoffe seien genannt:

1-Amino-2-chlor-4-(2'-methoxybenzoylamino)--anthrachinon
1-Amino-2-chlor-4-(4'-methoxybenzoylamino)--anthrachinon
1-Amino-2-chlor-4-(2'-phenoxybenzoylamino)--anthrachinon
1-Amino-2-chlor-4-(4'-phenoxybenzoylamino)--anthrachinon
1-Amino-2-chlor-4-(4'-phenylbenzoylamino)--anthrachinon
1-Amino-2-chlor-4-(4'-methoxycarbonylbenzoylamino)-anthrachinon
1-Amino-2-chlor-4-benzoylaminoanthrachinon
1-Amino-2-chlor-4-(2'-fluorbenzoylamino)--anthrachinon
1-Amino-2-chlor-4-(2'-chlorbenzoylamino)--anthrachinon
1-Amino-2-chlor-4-(3'-chlorbenzoylamino)--anthrachinon
1-Amino-2-chlor-4-(4'-chlorbenzoylamino)--anthrachinon
1-Amino-2-chlor-4-(4'-brombenzoylamino)--anthrachinon
1-Amino-2-chlor-4-(2',4'-dichlorbenzoylamino)--anthrachinon
1-Amino-2-chlor-4-(2',5'-dichlorbenzoylamino)--anthrachinon
1-Amino-2-chlor-4-(3',5'-dichlorbenzoylamino)--anthrachinon
1-Amino-2-chlor-4-(2',6'-dichlorbenzoylamino)--anthrachinon
1-Amino-2-chlor-4-(4'-methylbenzoylamino)--anthrachinon
1-Amino-2-chlor-4-(4'-tert.-butylbenzoylamino)--anthrachinon
1-Amino-2-chlor-4-(2'-chlor-6'-methylbenzoylamino)-anthrachinon
1-Amino-2-chlor-4-(3'-chlor-4'-methylbenzoylamino)-anthrachinon
1-Amino-2-brom-4-(2'-methoxybenzoylamino)--anthrachinon
1-Amino-2-brom-4-(4'-methoxybenzoylamino)--anthrachinon
1-Amino-2-brom-4-(2'-phenoxybenzoylamino)--anthrachinon
1-Amino-2-brom-4-(4'-phenoxybenzoylamino)--anthrachinon
1-Amino-2-brom-4-(4'-phenylbenzoylamino)--anthrachinon
1-Amino-2-brom-4-(4'-methoxycarbonylbenzoylamino)-anthrachinon
1-Amino-2-brom-4-benzoylaminoanthrachinon
1-Amino-2-brom-4-(2'-fluorbenzoylamino)--anthrachinon
1-Amino-2-brom-4-(2'-chlorbenzoylamino)--anthrachinon
1-Amino-2-brom-4-(3'-chlorbenzoylamino)--anthrachinon
1-Amino-2-brom-4-(4'-chlorbenzoylamino)--anthrachinon
1-Amino-2-brom-4-(4'-brombenzoylamino)--anthrachinon
1-Amino-2-brom-4-(2',4'-dichlorbenzoylamino)--anthrachinon

1-Amino-2-brom-4-(2',5'-dichlorbenzoylamino)-anthrachinon
1-Amino-2-brom-4-(3',5'-dichlorbenzoylamino)-anthrachinon
1-Amino-2-brom-4-(2',6'-dichlorbenzoylamino)-anthrachinon
1-Amino-2-brom-4-(4'-methylbenzoylamino)-anthrachinon
1-Amino-2-brom-4-(4'-tert.-butylbenzoylamino)-anthrachinon
1-Amino-2-brom-4-(2'-chlor-6'-methylbenzoylamino)-anthrachinon
1-Amino-2-brom-4-(3'-chlor-4'-methylbenzoylamino)-anthrachinon.

Zur Erzielung besonderer Effekte, wie z.B. verbesserter Löslichkeit kann es vorteilhaft sein, Farbkörper gemäss vorliegender Erfindung miteinander oder mit anderen geeigneten Farbkörpern zu mischen oder durch geeignete Wahl verschiedener Ausgangsstoffe erhaltene Synthese-Mischungen zu verwenden.

Als lineare Polyester seien insbesondere jene erwähnt, die durch Polykondensation von Terephthalsäure oder deren Estern mit Glykolen der Formel $HO-(CH_2)_n-OH$, worin n die Zahl 2-10 bedeutet, oder mit 1,4-Di(hydroxymethyl)cyclohexan oder durch Polykondensation von Glykoläthern von Hydroxybenzoesäuren, beispielsweise p-(ß-Hydroxyäthoxy)-benzoesäure erhalten werden. Der Begriff lineare Polyester umfasst auch Kopolyester, die durch teilweisen Ersatz der Terephthalsäure durch eine andere Dicarbonsäure oder eine Hydroxycarbonsäure und/oder durch teilweisen Ersatz des Glykols durch ein anderes Diol erhalten werden.

Von besonderem Interesse sind jedoch die Polyäthylenterephthalate.

Die zu färbenden linearen Polyester werden zweckmässig in Form von Pulver, Schnitzeln oder Granulaten mit dem Farbstoff innig vermischt. Dies kann beispielsweise durch Beschichten der Polyesterteilchen mit dem fein verteilten trockenen Farbstoffpulver oder durch Behandeln der Polyesterteilchen mit einer Lösung bzw. Dispersion des Farbstoffs in einem organischen Lösungsmittel und nachheriger Entfernung des Lösungsmittels geschehen.

Schliesslich kann der Farbstoff direkt dem geschmolzenen Polyester zugegeben werden.

Das Verhältnis von Farbstoff zu Polyester kann, je nach der gewünschten Farbstärke, innerhalb weiter Grenzen schwanken. Im allgemeinen empfiehlt sich die Verwendung von 0,01-2 Teilen Farbstoff auf 100 Teile Polyester.

Die so behandelten Polyesterteilchen werden nach bekannten Verfahren im Extruder geschmolzen und zu Gegenständen, insbesondere Folien oder Fasern, ausgepresst oder zu Platten gegossen.

Man erhält gleichmässig und intensiv gefärbte Gegenstände von hoher Lichtechtheit. Die verfahrensgemäss erhältlichen gefärbten Fasern zeichnen sich ausserdem durch hervorragende Nass- und Trockenreinigungsechtheiten wie auch durch vorzügliche Reibechtheit nach einer thermischen Nachbehandlung und gute Faserviskositätswerte aus.

Ein besonderer Vorteil der erfindungsgemäss zu verwendenden Farbstoffe besteht darin, dass sie sich in der Polyesterschmelze lösen, so dass bedeutend klarere Färbungen erhalten werden als bei Verwendung unlöslicher Pigmente. Trotz der hohen Temperaturen von bis 300°C können die Farbstoffe auch längere Zeit ohne Zersetzung in der Polyesterschmelze verbleiben, was auf eine hohe Thermostabilität hinweist.

Die Eignung der erfindungsgemäss zu verwendenden Farbstoffe zum Färben von linearen Polyestern in der Masse ist überraschend, da 1-Amino-4-benzoylamino-anthrachinon, das neben dem 1-Amino-2-brom-4-benzoylaminoanthrachinon in der DT-PS 1 212 936 zum Färben aromatischer Polyester aus wässriger Dispersion vorgeschlagen wurde, sich in der Polyesterschmelze rasch zersetzt.

In den nachfolgenden Beispielen bedeuten die Teile, sofern nichts anderes angegeben wird, Gewichtsteile, die Prozente Gewichtsprozente und die Temperaturen sind in Celsiusgraden angegeben.

Beispiel 1

Ein zur Faserherstellung geeignetes unmattiertes Polyäthylenterephthalat-Granulat wird in einem verschliessbaren Gefäss zusammen mit 1% 1-Amino-2-brom-4-benzoylaminoanthrachinon auf einer Schüttelmaschine 15 Minuten geschüttelt. Die gleichmässig gefärbten Granulatkörner werden auf einer Schmelzspinnanalge (285° ± 3°, Verweilzeit in der Spinnmasse ca. 5 Minuten) zu Fäden versponnen, die auf einer Streckzwirnanlage verstreckt und aufgespult werden. Man erhält infolge der Löslichkeit des Farbstoffs in Polyäthylenterephthalat eine rotviolette Färbung, die sich durch hervorragende Lichtechtheit, vorzügliche Wasch-, Trockenreinigungs-, Überfärbe-, Sublimations- und Reibechtheit nach einer thermischen Nachbehandlung sowie hohe Chloritbleichebeständigkeit und gute Faserviskositätswerte auszeichnet.

Beispiel 2

Verwendet man in Beispiel 1 anstelle des 1-Amino-2-brom- das 1-Amino-2-chlor-4-benzoylaminoanthrachinon, so erhält man eine rot-violette Färbung, die gegenüber der nach Beispiel 2 erhaltenen einen etwas gelbstichigeren Ton aufweist.

Beispiel 3

1000 Teile Polyäthylenterephthalat-Granulat, 10 Teile Titanoxid (Kronos RN 40) und 1 Teil fein verteiltes 1-Amino-2-brom-4-benzoylaminoanthrachinon werden in einem verschlossenen Gefäss 2 Stunden auf dem Rollblock vermischt. Das eingefärbte Granulat wird bei ca. 260° in Strängen von 2 mm extrudiert und wieder granuliert. Das erhaltene Granulat wird im Ankerschneckenspritzgussautomaten bei 270-280° zu Formlingen verspritzt. Man erhält einen rot-violetten gefärbten Formling von sehr guter Lichtbeständigkeit.

Verwendet man anstelle des 1-Amino-2-brom--4-benzoylaminoanthrachinons 1-Amino-4-benzoylaminoanthrachinon, so erhält man infolge Zersetzung des Farbkörpers eine schmutziggraue Färbung.

Beispiele 4 bis 24

Folgende Farbstoffe färben Polyester in der Masse gemäss den Beispielen 1 und 3 ebenfalls in rotvioletten bis violetten Tönen von sehr guten Echtheitseigenschaften:

4 1-Amino-2-brom-4-(2'-fluorbenzoylamino)--anthrachinon
5 1-Amino-2-brom-4-(3'-chlorbenzoylamino)--anthrachinon
6 1-Amino-2-brom-4-(4'-chlorbenzoylamino)--anthrachinon
7 1-Amino-2-chlor-4-(2'-fluorbenzoylamino)--anthrachinon
8 1-Amino-2-chlor-4-(3'-chlorbenzoylamino)--anthrachinon
9 1-Amino-2-chlor-4-(4'-chlorbenzoylamino)--anthrachinon
10 1-Amino-2-brom-4-(2'-chlorbenzoylamino)--anthrachinon
11 1-Amino-2-chlor-4-(2'-chlorbenzoylamino)--anthrachinon
12 1-Amino-2-brom-4-(2'-methoxybenzoylamino)-anthrachinon
13 1-Amino-2-chlor-4-(2'-methoxybenzoylamino)-anthrachinon
14 1-Amino-2-brom-4-(2'-phenoxybenzoylamino)-anthrachinon
15 1-Amino-2-chlor-4-(2'-phenoxybenzoylamino)-anthrachinon
16 1-Amino-2-brom-4-(2',5'-dichlorbenzoylamino)-anthrachinon
17 1-Amino-2-chlor-4-(4'-methylbenzoylamino)--anthrachinon
18 1-Amino-2-brom-4-(4'-methylbenzoylamino)--anthrachinon
19 1-Amino-2-chlor-4-(4'-tert.-butylbenzoylamino)-anthrachinon
20 1-Amino-2-brom-4-(4'-tert.-butylbenzoylamino)-anthrachinon
21 1-Amino-2-brom-4-(4'-phenylbenzoylamino)--anthrachinon
22 1-Amino-2-chlor-4-(4'-methoxycarbonylbenzoylamino)-anthrachinon
23 1-Amino-2-brom-4-(4'-methoxycarbonylbenzoylamino)-anthrachinon
24 1-Amino-2-brom-4-(3',5'-dichlorbenzoylamino)-anthrachinon.

Beispiel 25 (Farbstoffherstellung)

85,5 Teile 1-Amino-4-benzoylaminoanthrachinon werden unter Rühren in 200 Teilen Nitrobenzol suspendiert und nach Zugabe von 100 Teilen Wasser bei 30-35° im Laufe einer Stunde mit einer Lösung von 50,4 Teilen Brom in 60 Teilen Nitrobenzol versetzt. Durch dreistündiges Rühren bei 50-55° wird die Umsetzung zu Ende geführt. Man kühlt das Gemisch auf 30-35°, versetzt es mit 65 Teilen einer 40%igen Natriumhydrogensulfit-Lösung, rührt 1/2 Std. nach, kühlt auf 20° und saugt das Reaktionsprodukt schliesslich ab. Nach Waschen mit 60 Teilen Nitrobenzol, sowie mit Äthanol und heissem Wasser erhält man nach dem Trocknen 91 Teile = 86,5% d.Th. 1-Amino-2-brom-4-benzoylaminoanthrachinon, Schmelzpunkt 241-243°. Br ber. 18,97%, gef. 18,5%.

## Patentansprüche

1. Verfahren zum Färben linearer Polyester in der Masse, dadurch gekennzeichnet, dass man als Farbstoff eine Verbindung der Formel

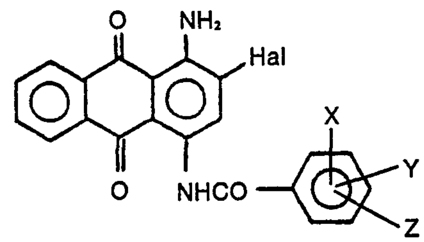

verwendet, worin Hal ein Chlor- oder Bromatom, X ein H- oder Halogenatom, eine Alkyl- oder Alkoxygruppe mit 1 - 6 C-Atomen, eine Alkoxycarbonylgruppe mit 2 - 7 C-Atomen, eine Phenylgruppe oder eine gegebenenfalls durch Chloratome oder Methylgruppen substituierte Phenoxygruppe, Y und Z H- oder Halogenatome oder Methylgruppen bedeuten.

2. Verfahren gemäss Anspruch 1, dadurch gekennzeichnet, dass man Farbstoffe der Formel

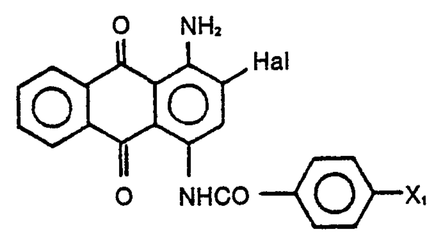

verwendet, worin Hal ein Chlor- oder Bromatom und $X_1$ ein H- oder Chloratom bedeutet.

3. Verfahren gemäss Anspruch 1, dadurch gekennzeichnet, dass man Farbstoffe der angegebenen Formel verwendet, worin Hal ein Bromatom bedeutet.

4. In der Masse gefärbte lineare Polyester enthaltend einen Farbstoff gemäss Anspruch 1.

## Claims

1. A process for colouring linear polyesters in the melt, which comprises the use of a colorant of the formula

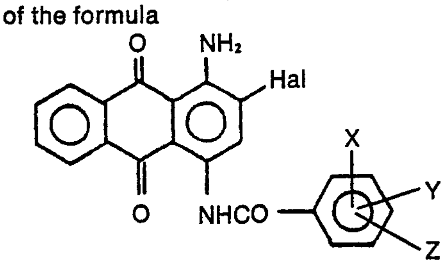

wherein Hal is a chlorine or bromine atom, X is a hydrogen or halogen atom, an alkyl or alkoxy group of 1 to 6 carbon atoms, an alkoxycarbonyl group of 2 to 7 carbon atoms, a phenyl group or a phenoxy group which is unsubstituted or substituted by chlorine atoms or methyl groups, and Y and Z are hydrogen or halogen atoms or methyl groups.

2. A process according to claim 1 which comprises the use of a colorant of the formula

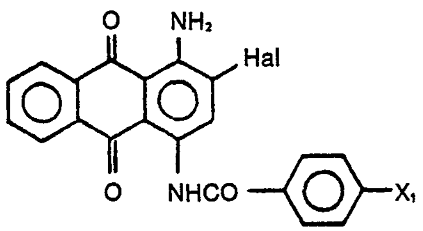

wherein Hal is a chlorine or bromine or bromine atom and $X_1$ is a hydrogen or chlorine atom.

3. A process according to claim 1 which comprises the use of a colorant of the indicated formula, wherein Hal is a bromine atom.

4. Melt coloured polyesters which contain a colorant according to claim 1.

**Revendications**

1. Procédé pour teindre des polyesters linéaires dans la masse, procédé caractérisé en ce qu'on utilise, comme colorant, un composé répondant à la formule

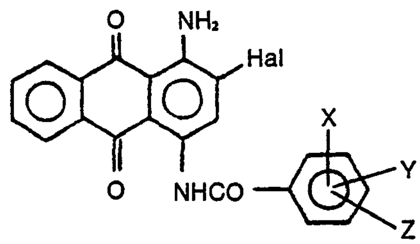

dans laquelle Hal représente un atome de chlore ou de brome, X représente un atome d'hydrogène ou d'halogène, un radical alkyle ou alcoxy contenant de 1 à 6 atomes de carbone, un radical alcoxycarbonyle contenant de 2 à 7 atomes de carbone, un radical phényle ou un radical phénoxy éventuellement porteur d'atomes de chlore ou de radicaux méthyles, et Y et Z représentent des atomes d'hydrogène ou d'halogènes ou des radicaux méthyles.

2. Procédé selon la revendication 1, caractérisé en ce qu'on utilise des colorants répondant à la formule

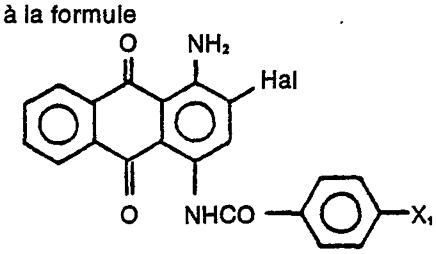

dans laquelle Hal représente un atome de chlore ou de brome et $X_1$ un atome d'hydrogène ou de chlore.

3, Procédé selon la revendication 1, caractérisé en ce qu'on utilise des colorants répondant à la formule indiquée dans laquelle Hal représente un atome de brome.

4. Polyesters linéaires teints dans la masse qui contiennent un colorant selon la revendication 1.